# FASCICULE DE BREVET EUROPEEN

(11) **EP 3 361 861 B1**
(45) Date de publication et mention de la délivrance du brevet: **07.08.2024**
(21) Numéro de dépôt: 16795117.7
(22) Date de dépôt: 12.10.2016
(51) Int. Cl.: B68C 1/20, B68C 1/02, B68C 1/00, A01K 29/00

(54) **SELLE D'EQUITATION EQUIPEE D'AU MOINS UN CAPTEUR**
REITSATTEL MIT MINDESTENS EINEM SENSOR
HORSE RIDING SADDLE COMPRISING AT LEAST ONE SENSOR

(30) Priorité: 12.10.2015 FR 1559669
(43) Date de publication de la demande: 22.08.2018
(73) Titulaire: Lim France, 24300 Nontron (FR)
(72) Inventeur: DURAY, Laurent, 33000 Bordeaux (FR); MARTIN, Pauline, 16380 Saint Germain de Montbron (FR)
(74) Mandataire: Fantin, Laurent
(86) Numéro de dépôt international: PCT/FR2016/052632
(87) Numéro de publication internationale: WO 2017/064416

(56) Documents cités:
- WO-A1-2007/132245
- WO-A1-2012/131206
- DE-A1- 102009 055 705
- DE-U1- 202010 000 555
- DE-U1- 202010 000 555

## Description

La présente demande se rapporte à une selle d'équitation équipée d'au moins un capteur.

Le document FR-2.648.234 décrit un dispositif de prise de mesure plus particulièrement adapté pour les chevaux. Ce dispositif comprend un support en forme de U inversé qui se fixe à l'extérieur de la selle, à l'avant de l'arçon. A cet effet, le support comprend deux orifices légèrement coniques, configurés pour recevoir deux doigts de fixation portés par une plaque solidaire de l'arçon de la selle. Ce support comprend des capteurs tels que des accéléromètres par exemple, pour mesurer des caractéristiques relatives aux mouvements du cheval. Ce dispositif n'est pas pleinement satisfaisant car la liaison entre le support et la selle n'est pas rigide ce qui génère des perturbations au niveau des mesures prises par les capteurs fixés sur le support. Par conséquent, pour obtenir des résultats exploitables, les signaux issus des capteurs doivent être traités ce qui tend à complexifier le procédé d'analyse des résultats.

Le document WO2007132245 décrit un capteur relié à la selle qui peut être dans la selle, notamment dans son habillage, ainsi qu'un système d'affichage positionné au niveau du pommeau.

Le document DE202010000555 U1 décrit une selle équipée d'un microphone, de haut-parleurs, d'un lecteur mp3, d'un téléphone portable.

La présente invention vise à remédier aux inconvénients de l'art antérieur.

A cet effet, l'invention a pour objet une selle d'équitation telle que définie dans la revendication 1.

Selon l'invention, il n'existe pas de mouvement relatif entre le capteur et l'arçon. Ainsi, les mesures obtenues à partir du ou des capteur(s)s ne sont pas perturbées par des phénomènes vibratoires et sont représentatives des mouvements du cheval. Elles peuvent être exploitées directement ce qui tend à simplifier les procédés d'analyse desdites mesures.

Selon un mode de réalisation, l'arçon comprend une arcade, une raquette qui comporte deux bandes latérales dont les extrémités arrières sont reliées par une portion arrière courbe supportant un troussequin et dont les extrémités avant sont reliées à l'arcade et la selle comprend :
- un boitier fixe contenant le ou les capteur(s) et qui est fixé sous l'arcade de l'arçon,
- un boitier amovible contenant au moins un moyen de stockage d'énergie électrique,
- un logement positionné au niveau du troussequin et configuré pour recevoir le boitier amovible,
- au moins une liaison filaire reliant le boitier fixe et le boîtier amovible qui comporte un connecteur.

Avantageusement, l'arçon comprend une coque rigide qui forme le logement et le connecteur comprend une premier partie solidaire de la coque rigide et une deuxième partie solidaire du boitier amovible, les première et deuxième parties étant configurées pour s'enficher l'une dans l'autre automatiquement lorsque le boitier amovible se translate selon une direction d'insertion jusqu'à un état inséré du boitier amovible dans le logement.

D'autres caractéristiques et avantages ressortiront de la description qui va suivre de l'invention, description donnée à titre d'exemple uniquement, en regard des dessins annexés sur lesquels :
- La figure 1 est une vue latérale d'un cheval équipé d'une selle qui illustre l'invention,
- La figure 2 est une vue en perspective d'une selle équipée d'un boitier électronique qui illustre un exemple non conforme à l'invention revendiquée,
- La figure 3 est une vue dessus de la selle visible sur la figure 2,
- La figure 4 est une vue en perspective qui illustre une partie du troussequin de la selle visible sur la figure 2,
- La figure 5 est une vue en perspective montrant un boitier électronique selon un exemple non conforme à l'invention revendiquée,
- La figure 6 est une coupe d'un arçon qui illustre un mode de réalisation de l'assemblage d'un boitier électronique,
- La figure 7 est une vue en perspective depuis l'arrière de l'arçon qui illustre un mode de réalisation de l'invention, à l'état inséré,
- La figure 8 est une vue en perspective depuis l'arrière de l'arçon visible sur la figure 7, à l'état sortie,
- La figure 9 est une vue en perspective d'un logement positionné au niveau du troussequin,
- La figure 10 est une coupe d'un troussequin qui illustre l'insertion d'un boitier dans un logement prévu au niveau troussequin,
- La figure 11 est une vue en perspective illustrant en éclaté les différents éléments du troussequin de l'arçon visible sur la figure 7,
- La figure 12 représente une courbe obtenue à partir des mesures d'un gyroscope qui illustre un moyen d'identification d'un saut,
- La figure 13 représente deux courbes obtenues à partir des mesures de deux accéléromètres qui illustrent un moyen d'identification d'un saut,
- La figure 14 est une vue d'un appareil de visualisation permettant de visualiser une vidéo sur laquelle sont affichées des informations relatives à des caractéristiques du cheval et/ou du cavalier.

Sur les différentes figures, on a représenté en 10 un cheval monté par un cavalier 12.

Le cheval 10 est équipé d'une selle 14 fixée sur le cheval à l'aide d'une sangle 15 qui ceinture le tronc du cheval 10.

Pour la suite de la description, l'axe X est un axe horizontal parallèle à la direction d'avance du cheval. Lorsque le cheval avance en ligne droite, l'axe X correspond à l'axe de la colonne vertébrale du cheval. L'axe Y est un axe horizontal perpendiculaire à l'axe X. L'axe Z est un axe perpendiculaire aux axes X et Y. L'axe Z est vertical. Une direction longitudinale est confondue avec l'axe X. Un plan longitudinal passe par l'axe X. Un plan transversal est un plan perpendiculaire à l'axe X.

Les termes « avant » et « arrière » appliqués à une partie de la selle font référence au cheval, une partie avant de la selle étant orientée vers la tête du cheval et une partie arrière vers la queue.

Les termes « supérieur » et « inférieur » appliqués à une partie de la selle font référence à l'orientation de la selle lorsqu'elle est sanglée sur le cheval, une partie supérieure étant orientée vers le cavalier et une partie inférieure étant orientée vers le cheval.

La selle 14 comprend une assise 16 pour le cavalier et un pommeau 18 situé à l'avant de l'assise 16
Sur le plan structurel, la selle 14 comprend un arçon 20 et un habillage qui n'est pas représenté sur ces figures. L'habillage de la selle n'est pas plus décrit car il est connu de l'homme du métier et peut être identique à celui des selles existantes.

L'arçon 20 est sensiblement symétrique par rapport au plan longitudinal et vertical PMV.

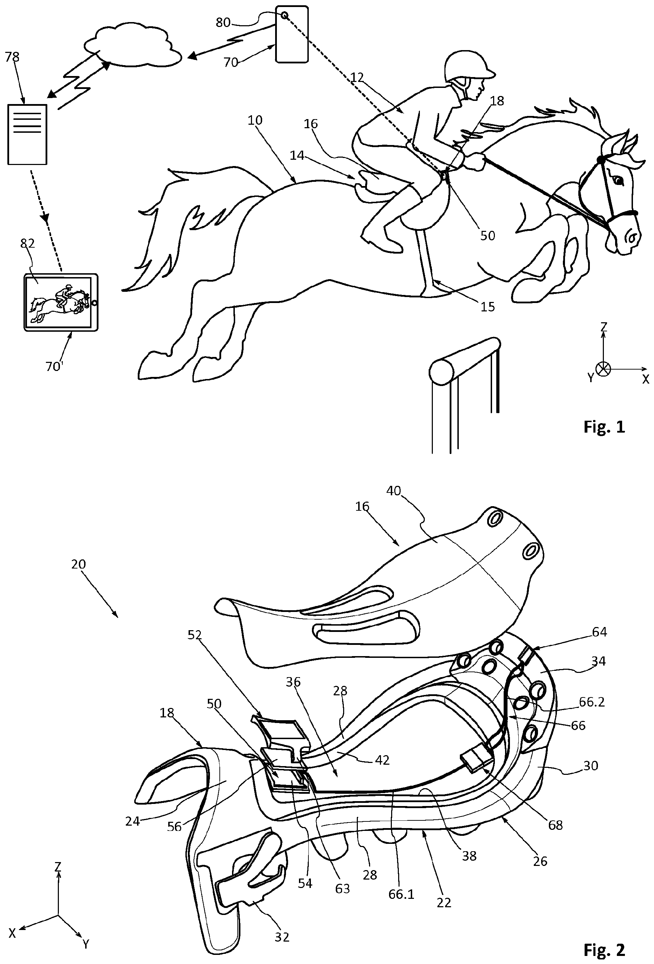

Selon un exemple non conforme à l'invention revendiquée, visible sur les figures 2 à 6, l'arçon 20 comprend une armature 22 qui comporte à l'avant une arcade 24 qui forme le pommeau 18 de la selle et à l'arrière une raquette 26 qui forme l'assise 16. L'arcade 24 a dans un plan transversal une forme en oméga. La raquette 26 comprend deux bandes latérales 28 dont les extrémités arrières sont reliées par une portion arrière courbe 30. Les extrémités avant des deux bandes latérales 28 sont reliées à l'arcade 24.

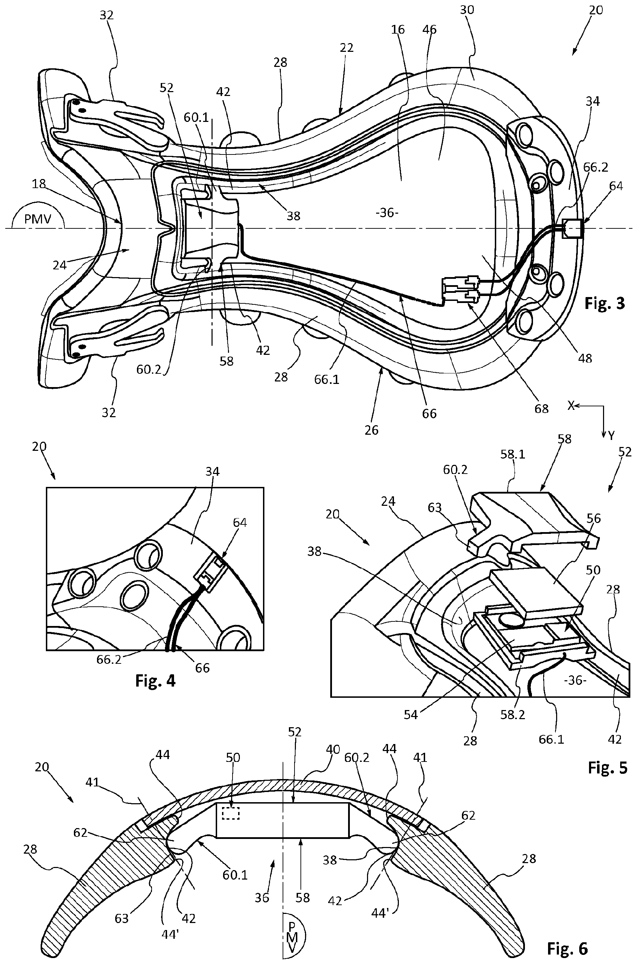

Comme illustré sur la figure 3, l'arcade 24 supporte deux couteaux 32 disposés de manière symétrique par rapport au plan longitudinal et vertical PMV. La portion arrière courbe 30 de la raquette 26 supporte un troussequin 34.

L'arcade 24 et la raquette 26 forment une ouverture 36 délimitée par un bord périphérique 38.

Selon un exemple non conforme à l'invention revendiquée, visible sur la figure 2, l'arçon 20 comprend également un support 40 solidarisé à l'armature 22 par des moyens de liaison 41 (visibles sur la figure 6). Ce support 40 prend appui sur le pourtour supérieur de l'ouverture 36.

Avantageusement, l'arçon 20 est en matériau composite.

L'arcade 24 et la raquette 26 ne sont pas plus décrites car elles peuvent être identiques à celles décrites dans le document FR-2.972.438.

Lorsque la selle 14 est sanglée sur le cheval 10 grâce à la sangle 16, l'arçon 20 et plus particulièrement la partie avant de l'arçon 20 suivent parfaitement les mouvements de la partie du corps du cheval à laquelle ils sont reliés.

Selon un premier exemple non conforme à l'invention revendiquée, visible sur les figures 2 à 6, le bord périphérique 38 de l'ouverture 36 comprend un profil concave 42 sur au moins une partie de chacune des bandes latérales 28, comme illustré sur la figure 6.

Ce profil concave 42 comprend une forme en C ouverte vers le plan médian vertical PMV avec de part et d'autre deux renflements 44, 44', par exemple un premier renflement 44 positionné au niveau de la face supérieure de l'arçon 20 et un second renflement 44' positionné au niveau de la face inférieure de l'arçon 20. La fonction de ce profil concave 42 sera expliquée ultérieurement.

Selon une caractéristique de l'invention, la selle 10 comprend au moins un capteur 50 intégré dans la selle 14, positionné à l'intérieur de l'habillage de la selle, à proximité du pommeau 18 et relié à l'arçon 20 par une liaison complète. Par liaison complète, on entend que le capteur 50 est immobile par rapport à l'arçon 20. Ainsi, il n'existe pas de mouvement relatif entre le capteur 50 et l'arçon 20. Le capteur 50 ou son support sont reliés directement à l'arçon 20 et non à l'habillage de la selle. La partie avant de l'arçon 20 étant elle-même sensiblement fixe par rapport au corps du cheval, le capteur 50 réalise des mesures représentatives des mouvements du cheval. Selon l'invention, les mesures ne sont pas perturbées par des phénomènes vibratoires comme dans le cas des dispositifs de l'art antérieur qui sont rapportés sur la selle et qui ne sont pas reliés directement à l'arçon de la selle.

A titre d'exemple, le (ou les) capteur(s) 50 est (sont) choisi(s) parmi les capteurs suivants : accéléromètre, gyroscope, tachymètre, capteur de géolocalisation, inclinomètre, goniomètre, capteur inertiel ou autre.

La selle 10 comprend un dispositif électronique 52 dans lequel est ou sont positionné(s) le ou les capteur(s) 50.

Ce dispositif électronique 52 comprend au moins une carte électronique 54 et au moins un moyen de stockage d'énergie électrique 56.

Pour la suite de la description, on entend par la carte électronique 54 une ou plusieurs carte(s) électronique(s) et par le moyen de stockage d'énergie électrique 56 un ou plusieurs moyen(s) de stockage d'énergie électrique.

Avantageusement, le dispositif électronique 52 comprend un boitier 58 dans lequel sont stockés la carte électronique 54 et le moyen de stockage d'énergie électrique 56. Le boitier 58 est configuré pour résister aux chocs, aux déformations. Le boitier 58 est fermé de manière étanche pour protéger la carte électronique 54 et le moyen de stockage d'énergie électrique 56 contre la poussière et l'humidité.

Selon un exemple non conforme à l'invention revendiquée, visible sur les figures 2 à 6, le boitier 58 est sensiblement parallélépipédique et comprend deux demi-coques 58.1 et 58.2 qui définissent lorsqu'elles sont assemblées un logement dans lequel sont positionnés la carte électronique 54 et le moyen de stockage d'énergie électrique 56. Les deux demi-coques 58.1 et 58.2 sont reliées par tout moyen approprié, comme par exemple des vis.

Lorsque la selle 14 est sanglée sur un cheval 10, la demi-coque 58.1 correspond à la demi-coque supérieure et la demi-coque 58.2 correspond à la demi-coque inférieure.

De préférence, la carte électronique 54 et/ou le moyen de stockage d'énergie électrique 56 sont immobilisés par rapport au boitier 58 par tout moyen approprié. Selon un mode de réalisation, la carte électronique 54 est fixée sur la face intérieure d'une des demi-coques 58.1 à l'aide de vis.

Selon un exemple non conforme à l'invention revendiquée, comme illustré par la figure 6, le boitier 58 est relié à l'arçon 20 par emboîtement. Cette configuration permet d'obtenir une liaison complète entre le boitier 58 et l'arçon 20 sans élément de liaison.

Selon une configuration, le boitier 58 est positionné au niveau de l'ouverture 36, à proximité du pommeau 18.

De préférence, le boitier 58 comprend deux ailes 60.1 et 60.2 disposées de part et d'autre du boitier 58, de manière symétrique par rapport au plan longitudinal vertical PMV. Chaque aile 60.1 et 60.2 comprend une première extrémité reliée au boitier 58 et une seconde extrémité 62 libre configurée pour coopérer avec le profil concave 42 du bord périphérique 38 de l'ouverture 36 de l'arçon 20. Les ailes 60.1 et 60.2 et les profils concaves 42 sont dimensionnés de manière à ce que les secondes extrémités 62 soient immobilisées entre les renflements 44, 44' et que le boitier 58 soit immobile selon une direction parallèle à l'axe Z.

Avantageusement, les ailes 60.1 et 60.2 sont configurées de sorte que la distance entre les secondes extrémités 62 des ailes 60.1 et 60.2 soit très légèrement supérieure à la distance maximale (dans un plan transversal) séparant les deux profils concaves 42 du bord périphérique 38. Ainsi, le boitier 58 est inséré en force entre les deux profils concaves 42.

De préférence, les secondes extrémités 62 comprennent chacune une génératrice rectiligne 63 (visible par exemple sur la figure 5), parallèle à l'axe X lorsque le boitier 58 est monté sur l'arçon. Selon un mode de réalisation, chaque génératrice rectiligne 63 a une longueur supérieure à 1 cm. Cette configuration permet un meilleur maintien du boitier 58, ce dernier ne pouvant plus pivoter autour de l'axe Z lorsqu'il est inséré entre les deux profils concaves 42. Selon cette configuration, pour solidariser le boitier 58 à l'arçon, le boitier 58 est introduit dans l'ouverture 36, pivoté selon l'axe Z et il est immobilisé par rapport à l'arçon 20 en le faisant pivoter de sorte à ce que les génératrices rectilignes 63 des secondes extrémités 62 soient orientées parallèlement à l'axe X et coopèrent avec les profils concaves 42.

Selon un mode de réalisation, chaque aile 60.1 et 60.2 est inclinée vers le bas de sorte que la seconde extrémité 62 est décalée vers le cheval par rapport à la première extrémité lorsque le boitier 58 est intégré dans la selle 14 et que la selle est sanglée sur le cheval. Cette configuration renforce la liaison entre le boitier 58 et l'arçon 20 et permet de décaler le boitier 58 vers le haut afin de dégager la partie entre les bandes latérales 28, comme illustré sur la figure 6.

Selon le premier exemple, la selle 14 comprend au moins un connecteur 64 relié au dispositif électronique 52 et accessible depuis l'extérieur de la selle 14.

Selon une configuration, la selle 14 comprend un seul connecteur 64 positionné à l'arrière de la selle 14, au niveau du troussequin 34.

En complément du connecteur 64, la selle 10 comprend au moins un fil 66, généralement un faisceau de fils, qui relie le connecteur 64 au dispositif électronique 52. Pour la suite de la description, le terme fil 66 est employé pour désigner aussi bien un fil qu'un faisceau de fils.

Avantageusement, le fil 66 comprend au moins deux tronçons, un premier tronçon 66.1 relié au dispositif électronique 52 et un second tronçon 66.2 relié au connecteur 64, les tronçons 66.2 étant reliés entre eux par un connecteur de raccordement 68.

Selon cette conception, il est possible d'intégrer le connecteur 64 dans le troussequin 34 lors de la fabrication de l'arçon 20, préalablement à la pose de l'habillage. Le dispositif électronique 52 est intégré dans la selle 14 après la mise en place de l'habillage sur la face supérieure de l'arçon 20, juste avant la mise en place de l'habillage qui recouvre la face inférieure de l'arçon 20. Le dispositif électronique 52 est alors relié au connecteur 64 en assemblant le connecteur de raccordement 68.

Cette conception permet d'intégrer le dispositif électronique 52, qui est un élément sensible, à la fin du procédé de fabrication de la selle 14. De plus, elle permet de simplifier l'accès et le démontage du dispositif électronique 52 pour les opérations de maintenance.

Sur le plan fonctionnel, le connecteur 64 est utilisé pour recharger le moyen de stockage d'énergie électrique 56, modifier le ou les programmes implémentés dans la carte électronique 54. Bien entendu, le connecteur 64 n'est pas limité à ces fonctions.

Selon un mode de réalisation, le moyen de stockage d'énergie électrique 56 comprend des batteries.

La carte électronique 54 comprend au moins une mémoire pour stocker des données, au moins un moyen de calcul et de traitement des données, un système de décompte du temps, un système de communication et au moins un capteur 50. Selon un mode de réalisation, la carte électronique 54 comprend au moins une unité centrale de traitement (microprocesseur) qui assure les fonctions de stockage de données, de calcul et de traitement des données, de décompte du temps.

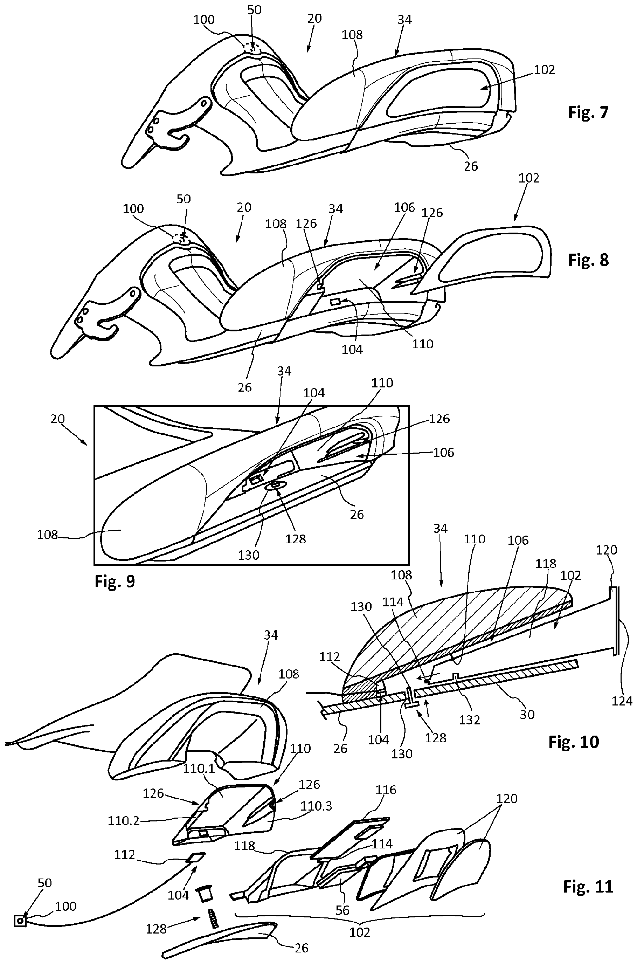

Selon un deuxième mode de réalisation conforme à l'invention revendiquée, visible sur les figures 7 à 11, le ou les capteurs 50 sont positionnés dans un boitier fixe 100 qui est relié par une liaison complète à l'arçon 20. Selon l'invention revendiquée, le boitier fixe 100 est fixé par tout moyen approprié (vissage, collage, ou autre) sur la face inférieure de l'arcade 24 au niveau du pommeau. Ainsi, selon ce deuxième mode de réalisation, le ou les capteurs 50 sont directement reliés à l'arçon 20. A titre d'exemple, les capteurs 50 sont intégrés dans une carte électronique reliée de manière rigide au boitier fixe 100 qui est lui-même relié de manière rigide à l'arçon 20. La zone sous l'arcade au niveau du pommeau est un emplacement protégé qui permet de limiter les contraintes sur le boitier fixe 100.

Au moins une partie du dispositif électronique 52 est positionnée dans le boitier fixe 100.

Selon ce deuxième mode de réalisation, la selle 10 comprend un boitier amovible 102 dans lequel au moins un moyen de stockage d'énergie électrique 56 est stocké. Cette configuration permet de retirer le boitier amovible 102 pour pouvoir recharger le ou les moyen(s) de stockage d'énergie électrique 56. Ainsi, la selle 10 n'a pas besoin d'être déplacée pour les recharger.

Le boitier fixe 100 et le boitier amovible 102 sont reliés par au moins une liaison filaire qui comprend un connecteur 104. Ce connecteur 104 est configuré pour permettre une connexion rapide et simple entre le boitier fixe 100 et le boitier amovible 102.

Avantageusement, le boitier amovible 102 comprend en plus du ou des moyen(s) de stockage d'énergie électrique 56, un microprocesseur et au moins un système de communication. De préférence, le boitier amovible 102 comprend un connecteur analogue au connecteur 64 utilisé pour recharger le moyen de stockage d'énergie électrique 56, modifier le ou les programmes implémentés dans le microprocesseur, une carte électronique, le système de communication.

Selon le deuxième mode de réalisation, la partie arrière de l'arçon 20, et notamment son troussequin 34, comprend un logement 106 configuré pour recevoir le boitier amovible 102.

Le troussequin 34 comprend un bloc 108 en polyuréthane par exemple, fixé sur la face supérieure de la portion arrière courbe 30 de la raquette 26.

Ce bloc 108 comprend un évidement de manière à former avec la face supérieure de la portion arrière courbe 30 de la raquette 26, le logement 106.

Avantageusement, le troussequin 34 comprend une coque rigide 110 qui forme le logement 106. Cette coque rigide 110 est fixée de manière rigide à la face supérieure de la portion arrière courbe 30 de la raquette 26. Ainsi, le logement 106 est délimité par des parois rigides à savoir la coque rigide 110 et une partie de la raquette 26. La coque rigide 110 a une forme en U renversée dans des plans transversaux et une hauteur qui augmente d'avant en arrière. Ainsi, la coque rigide 110 comprend une face supérieure 110.1 et deux faces latérales 110.2 et 110.3.

Selon ce deuxième mode de réalisation, le boitier amovible 102 est configuré pour occuper un état inséré comme illustré sur la figure 7 et un état sortie comme illustré sur la figure 8.

Le connecteur 104 comprend une premier partie 112 solidaire de la coque rigide 110 et une deuxième partie 114 solidaire du boitier amovible 102, les première et deuxième parties 112 et 114 étant configurées pour s'enficher l'une dans l'autre automatiquement lorsque le boitier amovible 102 se translate selon une direction d'insertion jusqu'à l'état inséré.

Selon une configuration visible sur la figure 11, le boitier amovible 102 comprend, à l'intérieur, une carte électronique 116 fixée au boitier amovible 102, qui intègre le microprocesseur et le système de communication et qui comporte une fiche qui forme la deuxième partie 114 du connecteur 104. Cette fiche traverse le boitier amovible 102 pour venir en saillie à l'extérieur du boitier amovible 102 qui est étanche.

Selon le deuxième mode de réalisation, le boitier amovible 102 comprend deux demi-coques 118 et 120 rigides, assemblées par tout moyen approprié comme des vis par exemple.

Une des deux demi-coques 120 forme un panneau arrière qui est configuré pour fermer le logement 106 lorsque le boitier amovible 102 est à l'état inséré et que les première et deuxième parties 112 et 114 du connecteur 104 sont connectées.

Pour augmenter l'autonomie du moyen de stockage d'énergie électrique 56, la demi-coque 120 du boitier amovible 102 comprend, sur sa face extérieure (visible lorsque le boitier amovible est à l'état inséré), au moins un panneau photovoltaïque 124 (visible sur la figure 10) pour produire de l'énergie électrique et recharger le moyen de stockage d'énergie électrique 56.

Avantageusement, un système de guidage 126 est prévu pour guider le boitier amovible 102 lors de son insertion dans le logement 106. Ce système de guidage 126 comprend deux glissières parallèles à la direction d'insertion, positionnées de part et d'autre du boitier amovible 102. A titre d'exemple, des rainures sont prévues sur chaque face latérale 110.2 et 110.3 de la coque rigide 110, dans lesquelles coulissent des nervures prévues de part et d'autre du boitier amovible 102. Le système de guidage 126 permet de positionner correctement le boitier amovible 102 dans son logement 106 et facilite la connexion des première et deuxième parties 112, 114 du connecteur 104.

De préférence, l'arçon 20 comprend un système de verrouillage 128 pour maintenir le boîtier amovible 102 à l'état inséré et les première et deuxième parties 112, 114 du connecteur 104 connectées.

A titre d'exemple, le système de verrouillage 128 comprend un pion 130 configuré pour se loger dans un trou 132 ménagé dans le boitier amovible 102 et qui est positionné au niveau de la portion arrière courbe 30 de la raquette 26. Le pion 130 est configuré pour occuper un état verrouillé dans lequel le pion 130 est logé au moins partiellement dans le trou 132 du boitier amovible 102 et un état déverrouillé dans lequel le pion 130 est positionné à l'extérieur du trou 132. Selon une configuration, le pion 130 est mobile en translation selon une direction perpendiculaire à la direction d'insertion.

Le système de verrouillage comprend un ressort pour pousser le pion 130 dans l'état verrouillé.

Le pion 130 traverse la raquette 26 et comprend une première extrémité configurée pour coopérer avec le trou 132 du boitier amovible 102 et venant en saillie au-dessus de la portion arrière courbe 30 de la raquette 26 à l'état verrouillé et une deuxième extrémité accessible depuis le dessous de la portion arrière courbe 30 de la raquette 26. Avantageusement, pour faciliter l'actionnement du pion, la deuxième extrémité comprend une languette préhensible, permettant de tirer sur le pion 130 à l'encontre du ressort afin de maintenir le pion à l'état déverrouillé pour pouvoir sortir le boitier amovible 102.

Quel que soit le mode de réalisation, le système de communication est configuré pour fonctionner avec au moins un protocole de communication de type « Wifi », « Bluetooth », GSM, ou autre.

Selon un mode de réalisation, le système de communication fonctionne avec le protocole « Bluetooth » afin de communiquer avec un appareil mobile 70 tel qu'un téléphone portable, un smartphone, une tablette, un ordinateur ou autre placé dans le voisinage de la selle 14.

Quelle que soit la variante, le dispositif électronique 52 est appairé avec un appareil mobile 70 par un système de communication afin de leurs permettre d'échanger des données ou des informations.

Le dispositif électronique 52 comprend au moins un programme implémenté dans l'unité centrale de traitement. De préférence, le dispositif électronique 52 comprend un premier programme pour traiter les données issues du ou des capteurs 50 et un second programme configuré pour faire fonctionner les différents éléments présents sur la carte électronique 54 et gérer le moyen de stockage d'énergie électrique 56.

Le dispositif électronique 52 est configuré pour détecter au moins un saut du cheval.

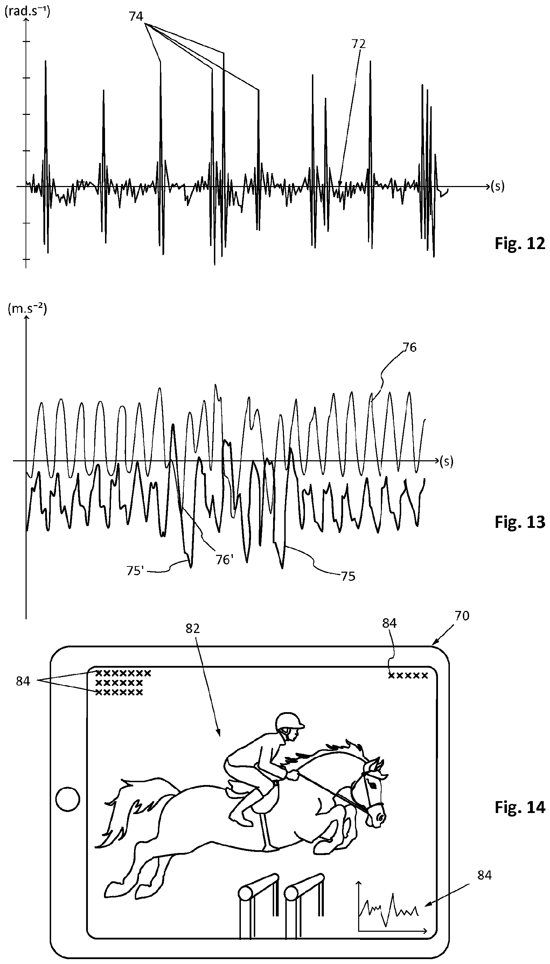

Selon une première variante, le dispositif électronique 52 comprend au moins un premier capteur pour mesurer une caractéristique du mouvement de rotation autour de l'axe Y. Selon un mode de réalisation, la carte électronique 54 comprend un gyroscope configuré pour mesurer une vitesse de rotation autour de l'axe Y. Les données mesurées par le gyroscope permettent d'obtenir une courbe 72 telle qu'illustrée sur la figure 12 qui représente une vitesse angulaire (exprimée en radian par seconde) en fonction du temps (exprimé en seconde). Selon un mode de réalisation, les pics sont filtrés avec un filtre passe-bas et une fréquence de coupure de 1 Hz.

En complément du gyroscope, le premier programme implémenté dans le dispositif électronique 52 est configuré pour identifier au moins un pic 74 sur la courbe 72, chaque pic 74 correspondant très probablement à un saut.

Selon une deuxième variante, le dispositif électronique 52 comprend au moins un deuxième capteur pour mesurer une accélération selon l'axe X et une accélération selon l'axe Z. Selon un mode de réalisation, la carte électronique 54 comprend un premier accéléromètre configuré pour mesurer une accélération selon l'axe X et un deuxième accéléromètre configuré pour mesurer une accélération selon l'axe Z. Les données mesurées par le premier accéléromètre permettent d'obtenir une courbe 75 (visible sur la figure 13) qui correspond à l'accélération selon l'axe X et les données mesurées par le deuxième accéléromètre permettent d'obtenir une courbe 76 (visible sur la figure 13) qui correspond à l'accélération selon l'axe Z. Chaque courbe 75 et 76 représente une accélération (exprimée en m.s⁻² ) en fonction du temps (exprimé en seconde).

En complément des accéléromètres selon les axes X et Z, le premier programme implémenté dans le dispositif électronique 52 est configuré pour identifier des irrégularités 75' et 76' respectivement sur les courbes 75 et 76, un saut correspondant à une irrégularité 76' sur la courbe 76 suivie d'une irrégularité 75' sur la courbe 75.

Avantageusement, le dispositif électronique 52 combine les première et deuxième variantes et comprend au moins un capteur pour mesurer une caractéristique du mouvement de rotation autour de l'axe Y et au moins un autre capteur pour mesurer une accélération selon l'axe X et une accélération selon l'axe Z, un saut étant identifié à chaque pic de la vitesse de rotation autour de l'axe Y et grâce aux irrégularités des accélérations selon les axes X et Z.

Bien entendu, l'invention n'est pas limitée à ces capteurs. Ainsi, le dispositif électronique 52 peut comprendre un capteur de positionnement permettant de déterminer la trajectoire du cheval ou tout autre capteur permettant d'identifier au moins une caractéristique du mouvement du cheval, au moins une caractéristique physiologique du cheval ou tout autre caractéristique relative au cheval et/ou au cavalier.

Selon une autre caractéristique de l'invention, les données collectées par le dispositif électronique 52 sont transmises à une plateforme 78 distante qui répertorie toutes les données transmises par les dispositifs électroniques 52 intégrés dans différentes selles. Cette solution permet de centraliser en un même point toutes les données collectées afin, entre autre, d'affiner les algorithmes qui assurent le traitement des données collectées.

Selon un premier mode de réalisation, les données collectées sont transmises directement par le dispositif électronique 52 à la plateforme 78. Dans ce cas, le dispositif électronique 52 comprend une carte à puce de type GSM permettant de transmettre les données via les réseaux de télécommunication ou via le réseau Internet.

Selon un autre mode de réalisation, les données collectées sont transmises par le dispositif électronique 52 à un appareil mobile 70 en utilisant un protocole de communication à faible distance comme le « Bluetooth » par exemple. Dans un second temps, les données collectées sont transmises par l'appareil mobile 70 à la plateforme 78 via les réseaux de télécommunication ou via le réseau Internet.

Décrit est un procédé de synchronisation des données collectées lors d'un parcours par le dispositif électronique 52 intégré dans la selle 14 avec une vidéo du parcours.

A cet effet, un appareil mobile 70 équipé d'un système de prise de vue 80 est utilisé pour réaliser une prise de vue du parcours et obtenir une vidéo du parcours.

Cet appareil mobile 70 comprend en plus du système de prise de vue 80, un moyen de stockage d'au moins une vidéo, une horloge qui définit un premier repère temporel et un système de communication pour l'appairer au dispositif électronique 52 intégré dans la selle 14 du cheval 10 effectuant le parcours.

L'appareil mobile 70 comprend également une application permettant entre autre de transmettre un signal de synchronisation au dispositif électronique 52. Selon un mode de réalisation, l'application comprend au moins une commande qui lorsqu'elle est activée déclenche la transmission du signal de synchronisation sous la forme d'une impulsion par exemple. L'heure d'envoi du signal de synchronisation est connue dans le premier repère temporel de l'horloge de l'appareil mobile 70. Ce signal de synchronisation reçu par le dispositif électronique 52 quasiment simultanément à l'envoi indique une origine temporelle dans un deuxième repère temporel lié au système de décompte du temps du dispositif électronique 52. Ainsi, le deuxième repère temporel du dispositif électronique 52 est synchronisé avec le premier repère temporel de l'appareil mobile 70.

Le début et la fin de la vidéo étant connus dans le premier repère temporel, l'instant de la prise de mesure de chaque donnée collectée étant connu par rapport à l'origine temporelle du deuxième repère temporel, l'instant de l'origine temporelle étant connu dans le premier repère temporel grâce au signal de synchronisation, les données collectées sont alors synchronisées à la vidéo.

Selon un premier mode opératoire, la commande de déclenchement du début de la vidéo correspond à la commande de transmission du signal de synchronisation.

Selon un deuxième mode opératoire, l'application implémentée sur l'appareil mobile 70 comprend une commande de synchronisation dédiée qui est activée avant la commande de déclenchement du début de la vidéo. Ainsi, dans ce cas, après l'appareillage du dispositif électronique 52 avec l'appareil mobile 70, un utilisateur qui souhaite filmer un parcours et visualiser de manière synchronisée au moins une information déterminée à partir des données collectées par le dispositif électronique 52, lance l'application et active la commande de synchronisation. A la réception du signal de synchronisation, le dispositif électronique 52 déclenche la collecte des données. Ultérieurement, l'utilisateur déclenche le début de la vidéo.

Avantageusement, lorsque la commande d'arrêt de la prise de vue est activée, un signal d'arrêt des prises de mesure est transmis au dispositif électronique 52 par l'appareil mobile 70. A réception de ce signal d'arrêt, le dispositif électronique 52 stoppe la collecte des données. En variante, l'application comprend deux commandes, une première commande pour l'arrêt de la prise de vue et une deuxième commande pour l'arrêt des prises de mesure. En variante, le signal de synchronisation peut être transmis par le dispositif électronique en direction de l'appareil mobile 70.

Quel que soit le mode opératoire, le procédé de synchronisation d'une vidéo obtenue à partir d'un appareil mobile 70 avec des données collectées par un dispositif électronique 52 embarqué sur le cheval comprend une première étape visant à appairer l'appareil mobile 70 et le dispositif électronique 52 et une seconde étape visant à transmettre un signal de synchronisation entre l'appareil mobile 70 et le dispositif électronique 52 de manière à ce que le repère temporel du dispositif électronique 52 et le repère temporel de l'appareil mobile 70 aient un point commun.

Décrit est un procédé de visualisation d'une vidéo 82 d'un parcours sur laquelle est visible au moins une information 84 déterminée à partir des données collectées par le dispositif électronique 52 lors du parcours, cette information 84 évoluant au fil du temps, le long du parcours.

A titre d'exemple, l'information 84 affichée simultanément à la vidéo 82 du parcours comprend des données relatives aux foulées (longueur, régularité), aux sauts (poussée, symétrie de la poussée, réception,...). Bien entendu, l'invention n'est pas limitée à ces informations.

Comme illustré sur la figure 14, la vidéo 82 affiche plusieurs informations sous différentes formes de présentation (valeur, diagramme ou autre).

Le procédé de visualisation comprend, en plus des étapes de prise de vue, de prise de mesure et de synchronisation décrites précédemment, une étape de détermination des valeurs de l'information 84 à partir du flux de données collectées et une autre étape de montage visant à incruster sur au moins certaines images de la vidéo 82, la valeur de l'information 84 qui correspond à chacune de ces images.

Selon un mode opératoire, l'application implémentée dans l'appareil mobile 70 dispose des moyens de calcul suffisant pour déterminer pour au moins certaines images de la vidéo 82, l'information 84 correspondante à partir des données collectées et pour réaliser le montage. Selon un autre mode opératoire, la vidéo et les données collectées sont transmises à la plateforme 78 qui détermine pour au moins certaines images, l'information 84 correspondante à partir des données collectées et réalise le montage. Après montage, la vidéo 82 avec l'information 84 est transmise à l'appareil mobile 70 ou un autre appareil mobile 70' afin de permettre à un utilisateur de visualiser une vidéo du parcours, les valeurs de l'information 84 visibles sur la vidéo 82 étant synchronisées aux images de la vidéo.

Pour réduire la taille des fichiers vidéo et du flux de données transmis à la plateforme 78, la vidéo et le flux de données collectées sont redimensionnés en fonction du premier saut et du dernier saut du parcours.

Les instants du premier saut et du dernier saut sont déterminées à partir des données collectées par le dispositif électronique comme précédemment expliqué, notamment à partir des données collectées par le gyroscope selon l'axe Y et par le ou les accéléromètre(s) selon les axes X et Z.

Selon un mode de réalisation, la vidéo et le flux de données collectées sont redimensionnés de sorte que le début correspond à un nombre de foulées déterminé avant le premier saut et la fin à un nombre de foulées déterminé après le dernier saut. A titre d'exemple, le début correspond à cinq foulées avant le premier saut et la fin à cinq foulées après le dernier saut.

Dans certains cas, la fréquence de la prise de vue est différente de la fréquence de prise de mesure. Généralement, la fréquence de la prise de mesure est supérieure à la fréquence de la prise de vue. Dans ce cas, le procédé de visualisation comprend une étape de ré-échantillonnage visant à sélectionner pour chaque image de la vidéo les données collectées correspondantes parmi le flux de données collectées.

## Revendications

1. Selle d'équitation comprenant un arçon (20) disposé dans un habillage, ledit arçon (20) comportant une arcade (24) qui forme un pommeau (18), la selle comprenant au moins un capteur (50) positionné dans la selle, **caractérisée en ce que** le capteur est positionné ou les capteurs (50) sont positionnés dans un boitier fixe (100) qui est relié par une liaison complète à l'arçon (20), le boitier fixe (100) étant fixé sur la face inférieure de l'arcade (24) au niveau du pommeau, de sorte que le capteur (50) soit immobile par rapport à l'arçon (20), le capteur (50) ou son support étant reliés directement à l'arçon (20) et non à l'habillage de la selle.

2. Selle d'équitation selon la revendication 1, **caractérisée en ce que** le ou les capteurs (50) sont configurés pour réaliser des mesures représentatives des mouvements du cheval.

3. Selle d'équitation selon l'une des revendications précédentes, ledit arçon (20) comprenant, en plus de l'arcade (24), une raquette (26) qui comporte deux bandes latérales (28) dont les extrémités arrières sont reliées par une portion arrière courbe (30) supportant un troussequin (34) et dont les extrémités avant sont reliées à l'arcade (24), **caractérisée en ce que** la selle (10) comprend :
- un boitier amovible (102) contenant au moins un moyen de stockage d'énergie électrique (56),
- un logement (106) formé par un évidement dans le troussequin (34) et configuré pour recevoir le boitier amovible (102),
- au moins une liaison filaire reliant le boitier fixe (100) et le boitier amovible (102) qui comporte un connecteur (104).

4. Selle d'équitation selon la revendication 3, **caractérisée en ce que** l'arçon (20) comprend une coque rigide (110) qui forme le logement (106) et **en ce que** le connecteur (104) comprend une premier partie (112) solidaire de la coque rigide (110) et une deuxième partie (114) solidaire du boitier amovible (102), les première et deuxième parties (112, 114) étant configurées pour s'enficher l'une dans l'autre automatiquement lorsque le boitier amovible (102) se translate selon une direction d'insertion jusqu'à un état inséré du boitier amovible (102) dans le logement (106).

5. Selle d'équitation selon la revendication 4, **caractérisée en ce que** le logement (106) est délimité par la coque rigide (110) et la portion arrière courbe (30) de l'arçon, ladite coque rigide (110) ayant une forme en U renversée avec une face supérieur (110.1) et deux faces latérales (110.2, 110.3).

6. Selle d'équitation selon la revendication 4 ou 5, **caractérisée en ce que** le logement (106) comprend un système de guidage (126) qui comporte deux glissières, parallèles à la direction d'insertion, positionnées de part et d'autre du boitier amovible (102).

7. Selle d'équitation selon l'une des revendications 4 à 6, **caractérisée en ce que** l'arçon (20) comprend un système de verrouillage (128) pour maintenir le boitier amovible à l'état inséré.

8. Selle d'équitation selon la revendication précédente, **caractérisée en ce que** le système de verrouillage (128) comprend un pion (130) mobile par rapport à l'arçon (20) et un trou (132) ménagé dans le boitier amovible (102), le pion (130 étant configuré pour occuper un état verrouillé dans lequel le pion (130) est logé au moins partiellement dans le trou (132) du boitier amovible (102) et un état déverrouillé dans lequel le pion (130) est positionné à l'extérieur du trou (132).

9. Selle d'équitation selon la revendication précédente, **caractérisée en ce que** le système de verrouillage comprend un ressort pour maintenir le pion (130) à l'état verrouillé.

10. Selle d'équitation selon la revendication précédente, **caractérisée en ce que** le pion (130) traverse la raquette (26) et comprend une première extrémité configurée pour coopérer avec le trou (132) du boitier amovible (102) et venant en saillie au-dessus de la portion arrière courbe (30) de la raquette (26) à l'état verrouillé et une deuxième extrémité accessible depuis le dessous de la portion arrière courbe (30) de la raquette (26).

11. Selle d'équitation selon l'une des revendications 3 à 10, **caractérisée en ce que** le boitier amovible (102) comprend au moins un panneau photovoltaïque (124).

12. Selle d'équitation selon l'une des revendications précédentes, **caractérisée en ce que** la selle comprend au moins un premier capteur pour mesurer une caractéristique du mouvement de rotation autour d'un axe (Y) horizontal et perpendiculaire à la direction longitudinale de la selle.

13. Selle d'équitation selon la revendication précédente, **caractérisée en ce que** la selle comprend au moins un deuxième capteur pour mesurer une accélération selon l'axe (X) horizontal et parallèle à la direction longitudinale de la selle et une accélération selon l'axe (Z) vertical.

## Patentansprüche

1. Reitsattel mit einem Sattelbaum (20), der in einer Verkleidung angeordnet ist, wobei der Sattelbaum (20) einen Bogen (24) aufweist, der einen Knauf (18) bildet, wobei der Sattel wenigstens einen Sensor (50) aufweist, der in dem Sattel angeordnet ist, **dadurch gekennzeichnet, dass** der Sensor in einem festen Gehäuse (100) angeordnet ist oder die Sensoren (50) in einem festen Gehäuse (100) angeordnet sind, das durch eine vollständige Verbindung mit dem Sattelbaum (20) verbunden ist, wobei das feste Gehäuse (100) an der Unterseite des Bogens (24) im Bereich des Knaufs befestigt ist, so dass der Sensor (50) in Bezug auf den Sattelbaum (20) unbeweglich ist, wobei der Sensor (50) oder seine Halterung direkt mit dem Sattelbaum (20) und nicht mit der Verkleidung des Sattels verbunden sind.

2. Reitsattel nach Anspruch 1, **dadurch gekennzeichnet, dass** der oder die Sensoren (50) so eingerichtet sind, dass sie repräsentative Messungen der Bewegungen des Pferdes durchführen.

3. Reitsattel nach einem der vorhergehenden Ansprüche, wobei der Sattelbaum (20) zusätzlich zum Bogen (24) eine Auflage (26) umfasst, die zwei Seitenbänder (28) aufweist, deren hintere Enden durch einen gekrümmten hinteren Abschnitt (30) verbunden sind, der ein Hinterzwiesel (34) trägt, und deren vordere Enden mit dem Bogen (24) verbunden sind, **dadurch gekennzeichnet, dass** der Sattel (10) Folgendes aufweist:
- ein abnehmbares Gehäuse (102), das wenigstens ein Mittel zur Speicherung elektrischer Energie (56) enthält,
- eine Aufnahme (106), die durch eine Aussparung in dem Hinterzwiesel (34) gebildet ist und so eingerichtet ist, dass sie das abnehmbare Gehäuse (102) aufnehmen kann,
- wenigstens eine Drahtverbindung, die das feste Gehäuse (100) und das abnehmbare Gehäuse (102) verbindet und die eine Steckverbindung (104) umfasst.

4. Reitsattel nach Anspruch 3, **dadurch gekennzeichnet, dass** der Sattelbaum (20) eine starre Schale (110) umfasst, die die Aufnahme (106) bildet, und dass die Steckverbindung (104) ein erstes Teil (112), das fest mit der starren Schale (110) verbunden ist, und ein zweites Teil (114) aufweist, das fest mit dem abnehmbaren Gehäuse (102) verbunden ist, wobei das erste und zweite Teil (112, 114) so eingerichtet sind, dass sie automatisch ineinander einrasten, wenn das abnehmbare Gehäuse (102) in einer Einführrichtung bis zu einem eingeführten Zustand des abnehmbaren Gehäuses (102) in der Aufnahme (106) verschoben wird.

5. Reitsattel nach Anspruch 4, **dadurch gekennzeichnet, dass** die Aufnahme (106) durch die starre Schale (110) und den gebogenen hinteren Abschnitt (30) des Sattelbaums begrenzt ist, wobei die starre Schale (110) eine umgekehrte U-Form hat, mit einer Oberseite (110.1) und zwei Seitenflächen (110.2, 110.3).

6. Reitsattel nach Anspruch 4 oder 5, **dadurch gekennzeichnet, dass** die Aufnahme (106) ein Führungssystem (126) umfasst, das zwei Gleitschienen aufweist, die parallel zur Einführrichtung verlaufen und auf beiden Seiten des abnehmbaren Gehäuses (102) angeordnet sind.

7. Reitsattel nach einem der Ansprüche 4 bis 6, **dadurch gekennzeichnet, dass** der Sattelbaum (20) ein Verriegelungssystem (128) umfasst, um das abnehmbare Gehäuse im eingeführten Zustand zu halten.

8. Reitsattel nach dem vorhergehenden Anspruch, **dadurch gekennzeichnet, dass** das Verriegelungssystem (128) einen Stift (130), der in Bezug auf den Sattelbaum (20) beweglich ist, und ein Loch (132) aufweist, das in dem abnehmbaren Gehäuse (102) ausgebildet ist, wobei der Stift (130 so eingerichtet ist, dass er einen verriegelten Zustand einnimmt, in dem sich der Stift (130) zumindest teilweise in dem Loch (132) des abnehmbaren Gehäuses (102) befindet, und einen entriegelten Zustand einnimmt, in dem der Stift (130) außerhalb des Lochs (132) angeordnet ist.

9. Reitsattel nach dem vorhergehenden Anspruch, **dadurch gekennzeichnet, dass** das Verriegelungssystem eine Feder umfasst, um den Stift (130) im verriegelten Zustand zu halten.

10. Reitsattel nach dem vorhergehenden Anspruch, **dadurch gekennzeichnet, dass** der Stift (130) durch die Auflage (26) verläuft und ein erstes Ende aufweist, das so eingerichtet ist, dass es mit dem Loch (132) des abnehmbaren Gehäuses (102) zusammenwirkt und im verriegelten Zustand über den gekrümmten hinteren Abschnitt (30) der Auflage (26) hinausragt, und ein zweites Ende aufweist, das von der Unterseite des gekrümmten hinteren Abschnitts (30) der Auflage (26) zugänglich ist.

11. Reitsattel nach einem der Ansprüche 3 bis 10,
**dadurch gekennzeichnet, dass** das abnehmbare Gehäuse (102) wenigstens ein Photovoltaikmodul (124) umfasst.

12. Reitsattel nach einem der vorhergehenden Ansprüche, **dadurch gekennzeichnet, dass** der Sattel wenigstens einen ersten Sensor zum Messen einer Eigenschaft der Drehbewegung um eine Achse (Y) aufweist, die horizontal und senkrecht zur Längsrichtung des Sattels verläuft.

13. Reitsattel nach dem vorhergehenden Anspruch, **dadurch gekennzeichnet, dass** der Sattel wenigstens einen zweiten Sensor zum Messen einer Beschleunigung entlang der horizontalen und parallel zur Längsrichtung des Sattels verlaufenden Achse (X) und einer Beschleunigung entlang der vertikalen Achse (Z) aufweist.

## Claims

1. Horse riding saddle comprising a saddle-tree (20) placed within a covering, said saddle-tree (20) having an arch (24) that forms a pommel (18), the saddle comprising at least one sensor (50) positioned in the saddle, **characterized in that** the sensor is positioned or the sensors (50) are positioned in a fixed case (100) which is connected to the saddle-tree (20) by a thorough connection, the fixed case (100) being attached on the underside of the arch (24) at the level of the pommel, so that the sensor (50) is immobile in relation to the saddle-tree (20), the sensor (50) or its support being connected directly to the saddle-tree (20) and not to the saddle covering.

2. Horse riding saddle according to claim 1, wherein said at least one sensor (50) are designed to take measurements that are representative of the movements of the horse.

3. Horse riding saddle according to one of the preceding claims, said saddle-tree (20) comprising, in addition to the arch (24), a bar (26) that has two lateral bands (28), the rear ends of which are connected by a curved rear portion (30) that supports a cantle (34) and the front ends of which are connected to the arch (24), wherein the saddle (10) comprises:
- a removable case (102) containing at least one means for storing electric power (56),
- a housing (106) formed by a recess in the cantle (34) and designed to receive the removable case (102),
- at least one wire connection connecting the fixed case (100) and the removable case (102) that has a connector (104).

4. Horse riding saddle according to Claim 3, wherein the saddle-tree (20) comprises a rigid shell (110) that forms the housing (106) and in that the connector (104) comprises a first part (112) that is integral with the rigid shell (110) and a second part (114) that is integral with the removable case (102), the first and second parts (112, 114) being designed to be plugged into one another automatically when the removable case (102) is translated in an insertion direction up to an inserted state of the removable case (102) in the housing (106).

5. Horse riding saddle according to Claim 4, wherein the housing (106) is delimited by the rigid shell (110) and the curved rear portion (30) of the saddle-tree, said rigid shell (110) having an inverted U shape with an upper surface (110.1) and two lateral surfaces (110.2, 110.3).

6. Horse riding saddle according to Claim 4 or 5, wherein the housing (106) comprises a guide system (126) that has two slides, parallel to the direction of insertion, placed on both sides of the removable case (102).

7. Horse riding saddle according to one of Claims 4 to 6, wherein the saddle-tree (20) comprises a locking system (128) to hold the removable case in the inserted state.

8. Horse riding saddle according to the preceding claim, wherein the locking system (128) comprises a pin (130) that is mobile in relation to the saddle-tree (20) and a hole (132) made in the removable case (102), the pin (130) being designed to occupy a locked state in which the pin (130) is housed at least partially in the hole (132) of the removable case (102) and an unlocked state in which the pin (130) is positioned outside of the hole (132).

9. Horse riding saddle according to the preceding claim, wherein the locking system comprises a spring to hold the pin (130) in the locked state.

10. Horse riding saddle according to the preceding claim, wherein the pin (130) passes through the bar (26) and comprises a first end designed to work with the hole (132) of the removable case (102) and protruding above the curved rear portion (30) of the bar (26) in the locked state and a second end that can be accessed from below the curved rear portion (30) of the bar (26).

11. Horse riding saddle according to one of claims 3 to 10, wherein the removable case (102) comprises at least one photovoltaic panel (124).

12. Horse riding saddle according to one of the preceding claims, wherein the saddle comprises at least a first sensor to measure a characteristic of the movement of rotation around a horizontal axis (Y) and that is perpendicular to the longitudinal direction of the saddle.

13. Horse riding saddle according to the preceding claim, wherein the saddle comprises at least a second sensor to measure an acceleration along the horizontal axis (X) and parallel to the longitudinal direction of the saddle and an acceleration along the vertical axis (Z).
